# EUROPEAN PATENT APPLICATION

(11) **EP 4 535 020 A1**
(43) Date of publication of application: **09.04.2025**
(21) Application number: 23815238.3
(22) Date of filing: 31.05.2023
(51) Int. Cl.: G01R 31/385, G01R 31/396, G01R 1/04, H01M 50/528, H01M 50/258, H01M 50/531, H01M 50/569

(54) **WIRING UNIT**

(30) Priority: 02.06.2022 CN 202210625672; 06.10.2022 JP 2022161744
(71) Applicant: Envision Dynamics Technology (Jiangsu) Co., Ltd., Wuxi, Jiangsu 214443 (CN); Envision Intelligent Innovation Dynamics Technology (Shanghai) Ltd., Shanghai 201315 (CN); AutoNetworks Technologies, Ltd., Yokkaichi-shi, Mie 510-8503 (JP); SUMITOMO WIRING SYSTEMS, LTD., Yokkaichi-shi, Mie 510-8503 (JP); SUMITOMO ELECTRIC INDUSTRIES, LTD., Osaka-shi, Osaka 541-0041 (JP); AESC Japan Ltd., Kanagawa, 2520012 (JP)
(72) Inventor: YANG, Wenbing, Shanghai 201315 (CN); BAI, Yulong, Shanghai 201315 (CN); FU, Fangkai, Shanghai 201315 (CN); HE, Yafei, Shanghai 201315 (CN); TAKADA, Kotaro, Osaka-shi, Osaka 541-0041 (JP); NAKAYAMA, Osamu, Osaka-shi, Osaka 541-0041 (JP); MIYAZAKI, Katsushi, Osaka-shi, Osaka 541-0041 (JP); MOCHIZUKI, Koichiro, Yokkaichi-shi, Mie 510-8503 (JP); TSUJI, Daiki, Osaka-shi, Osaka 541-0041 (JP); IZAWA, Takami, Zama-shi, Kanagawa 252-0012 (JP); NAKAI, Masayuki, Zama-shi, Kanagawa 252-0012 (JP); YANAGIHARA, Yasuhiro, Zama-shi, Kanagawa 252-0012 (JP)
(74) Representative: Müller-Boré & Partner Patentanwälte PartG mbB
(86) International application number: PCT/CN2023/097353
(87) International publication number: WO 2023/232060

(57) **Abstract**

Provided is a wiring unit (20) having excellent reliability of electrical connection between a terminal (30) and electrode leads (12, 12A). The wiring unit (20) is mounted on a battery stack (11L), which is formed by stacking a plurality of laminated batteries (11) including electrode leads (12, 12A, 12B), and includes a joining portion (13) for joining the electrode leads (12, 12A) of the laminated batteries (11) in a mutually overlapping manner, the wiring unit (20) comprising: a terminal (30); an electric wire (45) that is connected to the terminal (30); and a protector (50) that holds the terminal (30) and the electric wire (45), the terminal (30) including: a main body portion (31); a connecting portion (32) that is configured to extend from the main body portion (31) and is oppositely connected, in a first direction, to the electrode leads (12, 12A) forming the joining portion (13); and at least one bent plate portion (33) that extends from the main body portion (31) to the side of the laminated batteries (11) in the first direction, and the protector (50) including: a protector main body (51); and at least one recess (52A) that is recessed towards the side of the laminated batteries (11) in the first direction relative to the protector main body (51) and accommodates the bent plate portion (33), the bent plate portion (33) being inserted into the recess (52A) so as to be movable in the first direction, so that the connecting portion (32) can come into contact with the electrode leads (12, 12A).

## Description

### TECHNICAL FIELD

The disclosures relate to a wiring unit.

### BACKGROUND ART

A high-voltage battery pack, which is used in an electric vehicle, a hybrid vehicle, or the like, generally has a plurality of stacked battery cells that are electrically connected in series or in parallel by means of a wiring unit. As such wiring unit, a wiring unit described in Japanese Patent Publication No. 2020-527848 (hereinafter referred to as Patent Document 1) has been known. A battery module recorded in Patent Document 1 comprises: a plurality of cell components that are stacked in a left-right direction, the cell component including electrode leads at front and rear ends thereof; a module housing that is configured to accommodate the cell components in an internal space formed by four side walls, i.e., upper, lower, left and right side walls; and an end frame that is assembled in front of and behind the cell components, so that the cell components are connected to external devices.

### Prior art document

### Patent document

Patent Document 1: Japanese Patent Publication No. 2020-527848

### SUMMARY OF THE INVENTION

### Technical problem to be solved by the invention

In the aforesaid configuration, a cell component has a part that allows electrode leads of adjacent battery cells to be close to each other so as to be bent, overlap and be electrically connected, and due to the presence of the part, it is not required to provide a bus bar that connects the electrode leads to each other, so that the electrode leads are electrically connected to module terminals that are provided on an end frame. However, due to the bending processing of the electrode leads and the welding of the electrode leads, a comparatively large manufacturing tolerance is easily produced in the part where the electrode leads are connected to each other, especially in a front-rear direction.

In the aforesaid configuration, when the electrode leads and the module terminals are connected by laser welding or the like, due to the comparatively large manufacturing tolerance of the electrode leads in the front-rear direction, sometimes the module terminals cannot be made to come into full contact with the electrode leads. In such state where the module terminals do not come into full contact with the electrode leads, the electrical connection between the electrode leads and the module terminals may be rendered poor.

### Means for solving the technical problem

The wiring unit according to the disclosure is mounted on a battery stack, which is formed by stacking a plurality of laminated batteries including electrode leads, and includes a joining portion for joining the electrode leads of the laminated batteries in a mutually overlapping manner, the wiring unit comprising: a terminal; an electric wire that is connected to the terminal; and a protector that holds the terminal and the electric wire, the terminal including: a main body portion; a connecting portion that is configured to extend from the main body portion and is oppositely connected, in a first direction, to the electrode leads forming the joining portion; and at least one bent plate portion that extends from the main body portion to the side of the laminated batteries in the first direction, and the protector including: a protector main body; and at least one recess that is recessed towards the side of the laminated batteries in the first direction relative to the protector main body and accommodates the bent plate portion, the bent plate portion being inserted into the recess so as to be movable in the first direction, so that the connecting portion can come into contact with the electrode leads.

### Effect of the invention

According to contents of the disclosure, a wiring unit having excellent reliability of electrical connection between a terminal and electrode leads can be provided.

### BRIEF DESCRIPTION OF THE DRAWINGS

FIG. 1 is a perspective view showing a front part of a power storage module involved in Embodiment 1.
FIG. 2 is a front view of the power storage module.
FIG. 3 is an enlarged view showing a periphery of a terminal in FIG. 2.
FIG. 4 is a cross-sectional view taken along line A-A in FIG. 2.
FIG. 5 is a cross-sectional view taken along line B-B in FIG. 3.
FIG. 6 is a view showing a first position of a terminal in the B-B cross section in FIG. 3.
FIG. 7 is a view showing a second position of the terminal in the B-B cross section in FIG. 3.
FIG. 8 is a view with the terminal omitted in the B-B cross section in FIG. 3.
FIG. 9 is a cross-sectional view taken along line C-C in FIG. 3.
FIG. 10 is a cross-sectional view taken along line D-D in FIG. 5.
FIG. 11 is a perspective view showing a periphery of a terminal accommodating portion in the power storage module.
FIG. 12 is a view with the terminal omitted in FIG. 11.
FIG. 13 is a perspective view of a front part of a battery stack.
FIG. 14 is a perspective view showing a main part of a laminated battery.
FIG. 15 is a perspective view of a terminal for connecting an electric wire.
FIG. 16 is a perspective view showing an example of a terminal involved in Embodiment 2.
FIG. 17 is a perspective view showing an example of the terminal involved in Embodiment 2 different from that in FIG. 16.
FIG. 18 is a perspective view of a terminal involved in Embodiment 3.
FIG. 19 is a perspective view of a terminal involved in Embodiment 4.
FIG. 20 is a perspective view of a terminal involved in Embodiment 5.
FIG. 21 is a cross-sectional view of a power storage module, and is a view showing a cross section corresponding to FIG. 9 of Embodiment 1.
FIG. 22 is a cross-sectional view of a power storage module, and is a view showing a cross section corresponding to FIG. 10 of Embodiment 1.
FIG. 23 is a front view of a front part of a power storage module involved in Embodiment 6.
FIG. 24 is a perspective view of a terminal involved in Embodiment 6.
FIG. 25 is a perspective view of a protector main body in Embodiment 6 and other embodiments (6)-(7).
FIG. 26 is an enlarged view of a region D in FIG. 25.
FIG. 27 is a perspective view of a terminal involved in Embodiment 7.

### DETAILED DESCRIPTION

First, embodiments of the disclosure are described by way of examples.
(1) The wiring unit according to the disclosure is mounted on a battery stack, which is formed by stacking a plurality of laminated batteries including electrode leads, and includes a joining portion for joining the electrode leads of the laminated batteries in a mutually overlapping manner, the wiring unit comprising: a terminal; an electric wire that is connected to the terminal; and a protector that holds the terminal and the electric wire, the terminal including: a main body portion; a connecting portion that is configured to extend from the main body portion and is oppositely connected, in a first direction, to the electrode leads forming the joining portion; and at least one bent plate portion that extends from the main body portion to the side of the laminated batteries in the first direction, and the protector including: a protector main body; and at least one recess that is recessed towards the side of the laminated batteries in the first direction relative to the protector main body and accommodates the bent plate portion, the bent plate portion being inserted into the recess so as to be movable in the first direction, so that the connecting portion can come into contact with the electrode leads.
   According to such configuration, the bent plate portion is inserted into the recess so as to be movable in the first direction, so that the connecting portion is moveable relative to the protector in the first direction, so when the connecting portion is connected to the electrode leads forming the joining portion, the connecting portion can be brought into contact with the electrode leads even if there is the manufacturing tolerance of the electrode leads in the first direction. Thus, the reliability of the electrical connection between the connecting portion and the electrode leads can be improved.
(2) Preferably, the terminal includes: a bent portion that connects an end edge of the main body portion to an end edge of the bent plate portion; and a folded portion that is connected to and overlaps the main body portion, the bent portion, and the bent plate portion.
   According to such configuration, the strength of the bent portion can be improved by means of the folded portion.
(3) Preferably, the terminal includes a bent portion that connects the end edge of the main body portion and the end edge of the bent plate portion, the plate thickness direction of the bent portion continuously changes from the first direction to a direction orthogonal to the first direction from the main body portion towards the bent plate portion, and the bent portion includes a protruding portion that protrudes from the bent portion in the plate thickness direction of the bent portion.
   According to such configuration, the strength of the bent portion can be improved by means of the protruding portion.
(4) Preferably, the bent plate portion includes a protruding strip portion that protrudes from the bent plate portion towards the inner wall of the recess in a direction orthogonal to the first direction and extends in the first direction, and the protruding strip portion and the protruding portion are continuously formed.
   According to such configuration, the part where the bent plate portion and the inner wall of the recess come into contact with each other can be reduced by forming the protruding strip portion, so even if the bent plate portion comes into contact with the inner wall of the recess, the bent plate portion becomes easily slidable. In addition, since the protruding strip portion and the protruding portion are continuously formed, the protruding strip portion and the protruding portion are easily formed.
(5) Preferably, a convex portion is convexly provided on the side wall of the recess, and the convex portion abuts against the bent plate portion.
   According to such configuration, the contact area between the recess and the bent plate portion is reduced by convexly providing the convex portion on the side wall of the recess, which makes it more convenient for the bent plate portion to slide inside the recess than the case where the entire plane of the bent plate portion comes into contact with the recess.
(6) Preferably, the terminal includes a plurality of bent plate portions.
   According to such configuration, the state of the terminal is easily controlled by forming the plurality of bent plate portions.
(7) Preferably, the protector includes an abutment portion that abuts against the terminal from the side of the laminated batteries in the first direction.
   According to such configuration, the movement of the terminal towards the side of the laminated batteries in the first direction can be restricted by means of the abutment portion.
(8) Preferably, the protector includes a locking portion that is locked to the terminal from a side opposite to the side of the laminated batteries in the first direction.
   According to such configuration, the movement of the terminal towards a side opposite to the side of the laminated batteries in the first direction can be restricted by means of the locking portion.
(9) Preferably, the protector includes a flexible piece that extends from the protector main body and is flexibly deformable towards a direction orthogonal to the first direction, the front end of the flexible piece includes the locking portion and is arranged inside the recess, an opening portion that penetrates the bent plate portion is formed at the bent plate portion, and the edge part of the opening portion includes a locking receiving portion that is locked to the locking portion.
   According to such configuration, the insertion of the bent plate portion into the recess and the locking of the terminal relative to the protector can be smoothly performed by providing the flexible piece including the locking portion.
(10) Preferably, the protector main body is provided with a limiting column, the terminal is provided with a through hole, and the limiting column is configured to pass through the through hole; the limiting column includes a column body and a column head that is connected to the column body, and in the height direction of the column body, the projection area of the column head is larger than the projection area of the through hole, and the projection area of the through hole is larger than the projection area of the column body.
   According to such configuration, not only can the through hole in the terminal pass through the column body, but also can the terminal move in the height direction of the column body, and the limiting column and the protector main body jointly limit the forward and backward movement of the terminal.
(11) Preferably, the terminal includes a wire connecting portion that is configured to extend from the main body portion and connects the electric wire, the wire connecting portion includes a base and a crimping piece that extends from the base, and the electric wire is arranged to be closer to the side of the laminated batteries in the first direction than the base and is crimped by the crimping piece.
   According to such configuration, since the electric wire is arranged to be closer to the side of the laminated batteries in the first direction than the base, the size by which protrusion from the main body portion of the wire connecting portion to the side opposite to the side of the laminated batteries in the first direction is made is easily reduced. Thus, the size of the wiring unit in the first direction can be reduced.
(12) Preferably, the terminal includes a wire connecting portion configured to extend thereon, and the protector main body is provided with a wire connecting portion accommodating portion, in which the wire connecting portion is arranged.
   According to such configuration, by providing the wire connecting portion to match the wire connecting portion accommodating portion, the terminal can be prevented from rotating during welding of the terminal with the electrode leads, which improves the stability of the terminal and avoids poor welding.
(13) Preferably, the connecting portion is provided with an arc-shaped connecting portion, which is provided with several strip-shaped holes, and is arranged to absorb the expansion of the electrode leads.
   According to such configuration, the arc-shaped connecting portion is provided on the connecting portion of the terminal, so that the arc-shaped connecting portion can absorb the displacement of the electrode leads caused when the cell expands, which avoids the risk of the structure of the terminal being unstable, and the terminal falling off or even breaking caused by the terminal being pulled when the cell expands and deforms.

### [Detailed descriptions of embodiments of the disclosure]

The embodiments of the disclosure are described below. The contents of the disclosure are not limited to these examples but are shown by the Claims, and are intended to include all modifications having the same meanings as the Claims and within the scope of protection of the Claims.

### <Embodiment 1>

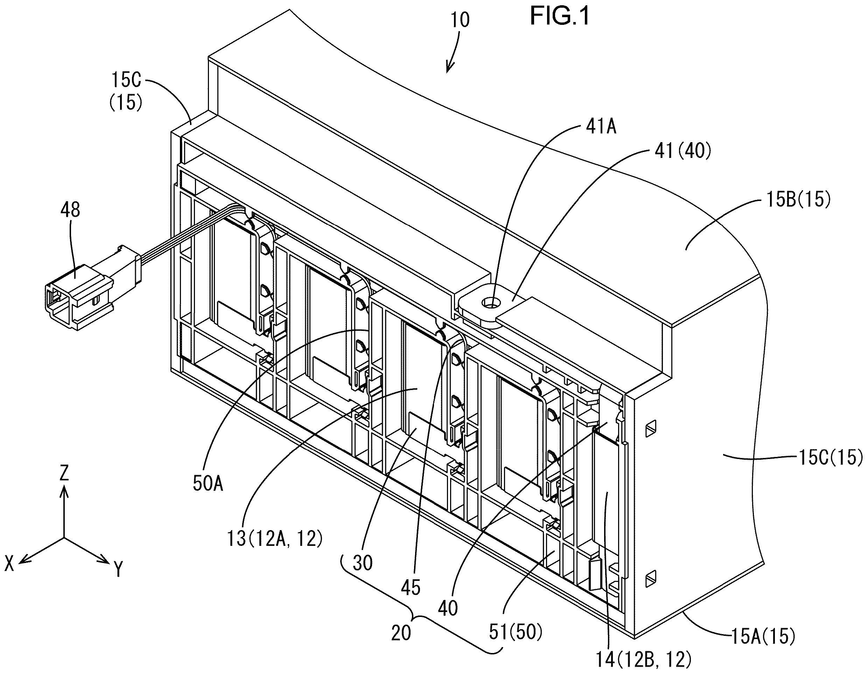

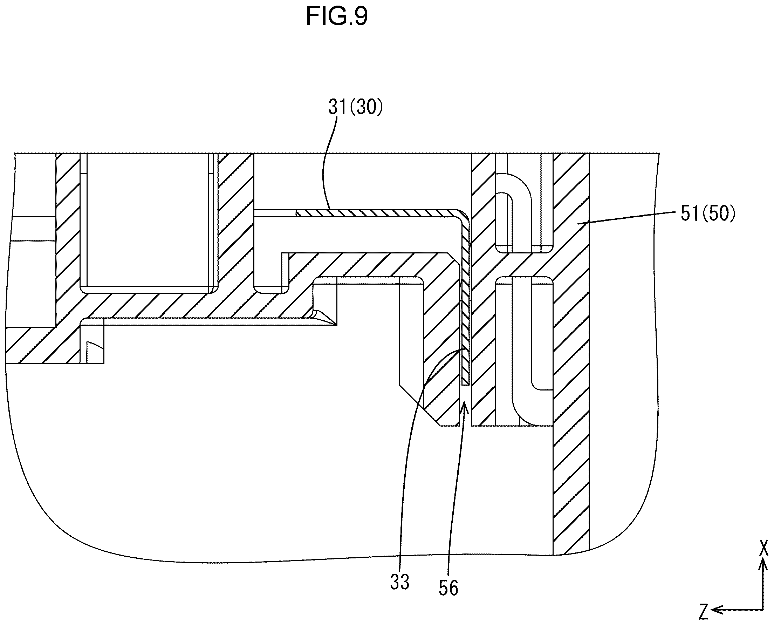

Embodiment 1 of the disclosure is described with reference to FIG. 1 to FIG. 15. A power storage module 10 including a wiring unit 20 according to the embodiment is mounted on a vehicle such as an electric vehicle or a hybrid vehicle, and is used as a driving source of the vehicle. In the descriptions below, as for a plurality of identical members, sometimes only some of the members are marked with reference signs, while the reference signs of the other members are omitted. In the descriptions below, the direction indicated by the arrow line X is set to the front direction, the direction indicated by the arrow line Y is set to the left direction, and the direction indicated by the arrow line Z is set to the upper direction. In the embodiment, the front-rear direction is an example of the first direction.

### [Battery stack]

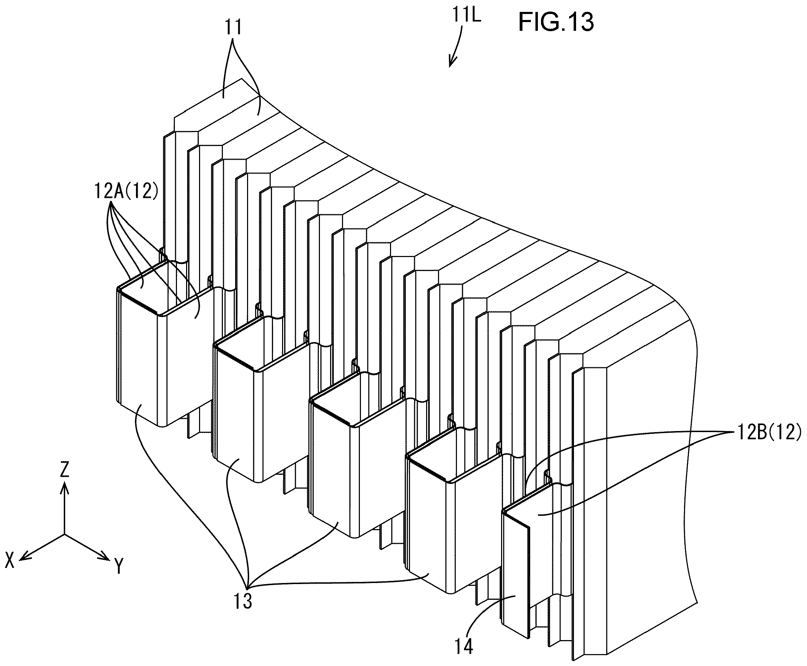

The power storage module 10 includes: a battery stack 11L as shown in FIG. 13; and the wiring unit 20 that is mounted on the battery stack 11L as shown in FIG. 1. As shown in FIG. 1, the power storage module 10 according to the embodiment further includes a housing 15 that covers the battery stack 11L from sides including upper, lower, left and right sides. The housing 15 is composed of a bottom portion 15A arranged on the lower surface side of the battery stack 11L, a top portion 15B arranged on the upper surface side of the battery stack 11L, and a pair of side portions 15C that connect the bottom portion 15A and the top portion 15B on the left and right sides.

### [Laminated battery, electrode lead]

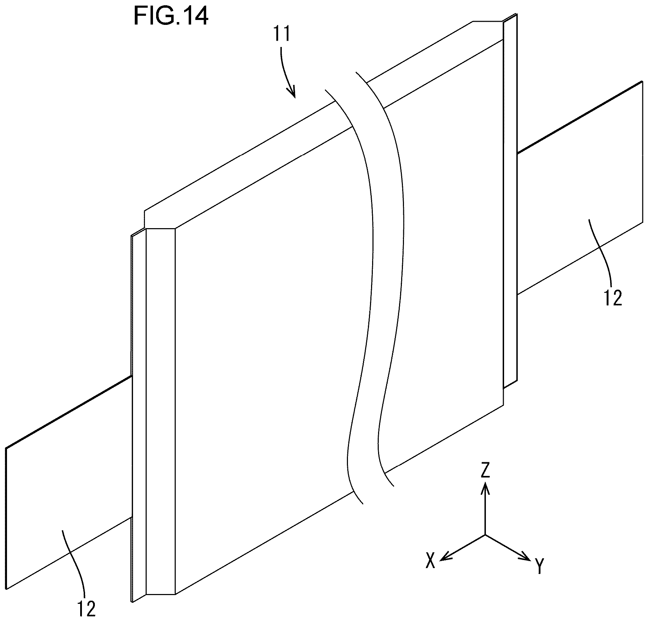

As shown in FIG. 13, the battery stack 11L is formed by stacking a plurality of (eighteen in the embodiment) laminated batteries 11 in the left-right direction. In addition, in FIG. 13, only the front side part of the battery stack 11L is shown. As shown in FIG. 14, the laminated battery 11 is formed in a shape that is comparatively long in the front-rear direction and flat in the left-right direction. A power storage element (not shown) is accommodated inside the laminated battery 11. A pair of electrode leads 12 are arranged on both sides of the laminated battery 11 in the front-rear direction and protrude in directions opposite to each other. The pair of electrode leads 12 are plate-shaped and have polarities opposite to each other.

### [Joining portion]

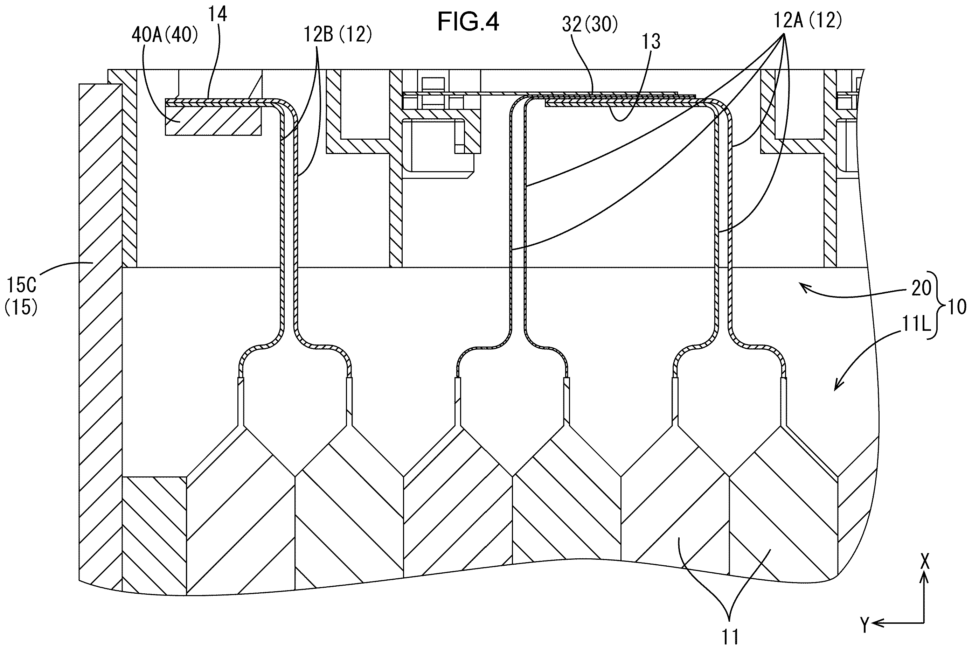

As shown in FIG. 4 and FIG. 13, the battery stack 11L is provided with a joining portion 13 for electrically connecting four electrode leads 12 of the laminated batteries 11 that are arranged continuously in the left-right direction. That is, the four electrode leads 12 are bent leftwards or rightwards at a substantially right angle, overlap, and are joined by laser welding, thereby forming the joining portion 13. The electrode leads 12 forming the joining portion 13 are connecting electrode leads 12A. Among the four connecting electrode leads 12A, the two connecting electrode leads 12A arranged on the right side and the two connecting electrode leads 12A arranged on the left side have opposite polarities. For example, the two connecting electrode leads 12A on the right side are positive electrodes, and the two connecting electrode leads 12A on the left side are negative electrodes. Thus, in the battery stack 11L, the joining portion 13 connects the two laminated batteries 11, which are connected in parallel, in series. As shown in FIG. 13, the battery stack 11L includes four joining portions 13 at the front part. In addition, although not shown, the battery stack 11L also includes four jointing portions 13 at the rear part.

The process of forming the joining portion 13 includes bending processing, laser welding, or the like of the electrode leads 12, so the tolerance of the joining portion 13 (and the connecting electrode lead 12A), especially in the front-rear direction, easily becomes large. For example, in the embodiment, the tolerance of the joining portion 13 (and the connecting electrode lead 12A) in the front-rear direction is about ± several millimeters, which is about five times the thickness of the electrode lead 12.

As shown in FIG. 4 and FIG. 13, the front left end of the battery stack 11L includes an output portion 14. In addition, although not shown, the rear right end of the battery stack 11L also includes an output portion 14. The output portion 14 is formed by joining two electrode leads 12 that do not form the joining portion 13 among the electrode leads 12. The electrode leads 12 forming the output portion 14 are set as output electrode leads 12B. The two output electrode leads 12B forming one output portion 14 have polarities the same as each other. The output portion 14 forms an overall positive electrode or negative electrode of the battery stack 11L. That is, for example, when the front output portion 14 is the overall positive electrode of the battery stack 11L, the rear output portion 14 is the overall negative electrode of the battery stack 11L.

### [Wiring unit]

As shown in FIG. 1, the wiring unit 20 according to the embodiment comprises: a terminal 30 that is connected to the connecting electrode lead 12A; a bus bar 40 that is connected to the output electrode lead 12B; an electric wire 45 that is connected to the terminal 30; and a protector 50 that holds the terminal 30, the bus bar 40 and the electric wire 45. The configuration of the wiring unit 20 arranged on the front side of the power storage module 10 is described in detail below. Although not shown, the wiring unit 20 arranged on the rear side of the power storage module 10 is configured in the same manner as the wiring unit 20 arranged on the front side of the power storage module 10.

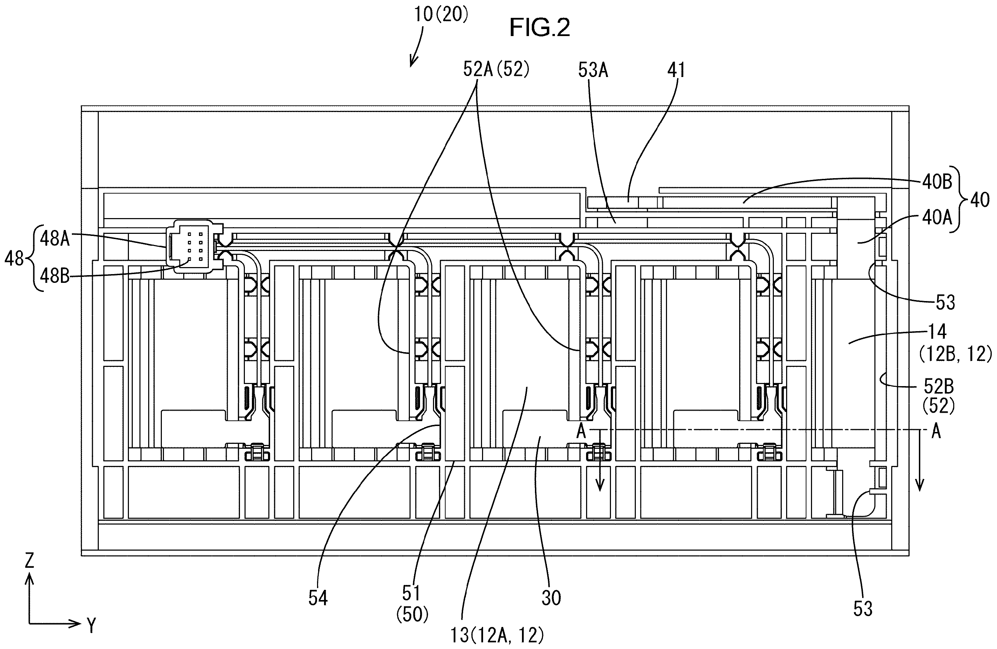

The bus bar 40 is plate-shaped and is formed by processing conductive sheet metal. As shown in FIG. 2, the bus bar 40 includes a first portion 40A that extends in the up-down direction and a second portion 40B that is connected to the upper end of the first portion 40A. The first portion 40A is flat in the front-rear direction. The second portion 40B extends rightwards from the upper end of the first portion 40A and is flat in the up-down direction. The bus bar 40 is held by a bus bar holding portion 53 of the protector 50, and is connected to the output electrode lead 12B at the center part of the first portion 40A in the up-down direction. A bus bar side connecting portion 41 is provided at the right end of the second portion 40B.

As shown in FIG. 1, the bus bar side connecting portion 41 has a penetrating hole 41A through which a bolt is inserted. An external connecting terminal that is not shown overlaps the bus bar side connecting portion 41 and is fastened to the bus bar side connecting portion 41 by means of a bolt. Thus, the bus bar side connecting portion 41 is electrically connected to the external connecting terminal. The external connecting terminal is used for connecting an external device that is not shown to the power storage module 10.

### [Electric wire]

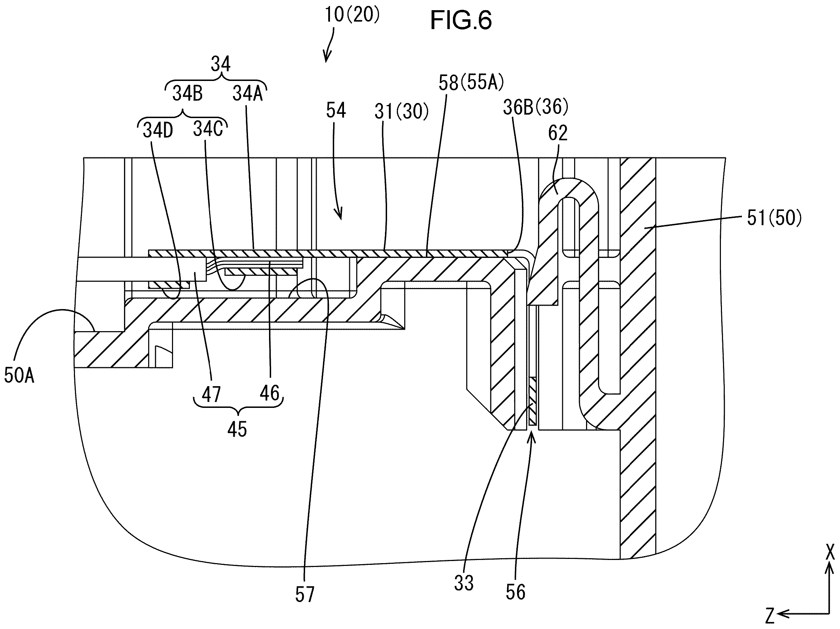

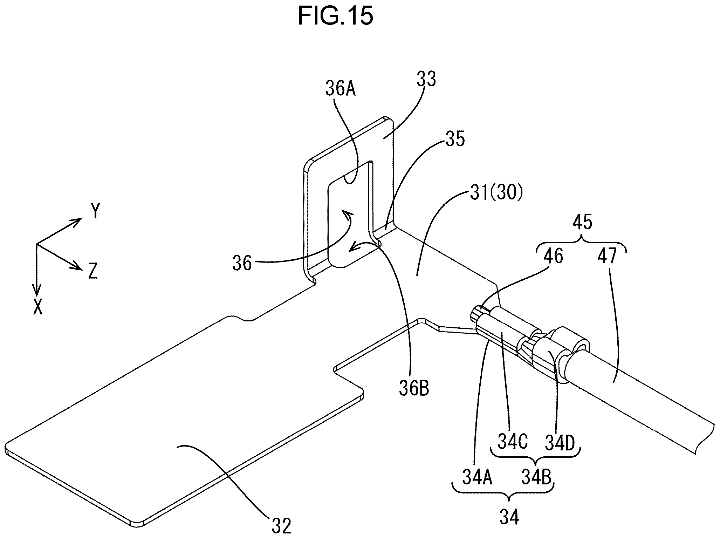

As shown in FIG. 6 and FIG. 15, the electric wire 45 has a core wire 46 and an insulating coating 47 that covers the core wire 46. One end of the electric wire 45 is connected to the terminal 30. As shown in FIG. 1, the other end of the electric wire 45 is bundled together and connected to a connector 48. The electric wire 45 is routed in a wiring recess 50A of the protector 50 and is routed in a predetermined position.

As shown in FIG. 2, the connector 48 includes a housing 48A made of an insulating synthetic resin and a male terminal 48B accommodated inside the housing 48A. The connector 48 is embedded in a counterpart connector (not shown) having a female terminal. The counterpart connector is connected to an external ECU (Electronic Control Unit) or the like via an electric wire that is not shown. The ECU is a member equipped with a microcomputer, elements, or the like, and is a common configuration having functions for detecting voltages, currents, temperatures, or the like of the respective laminated batteries 11 and controlling charge and discharge of the respective laminated batteries 11.

### [Terminal]

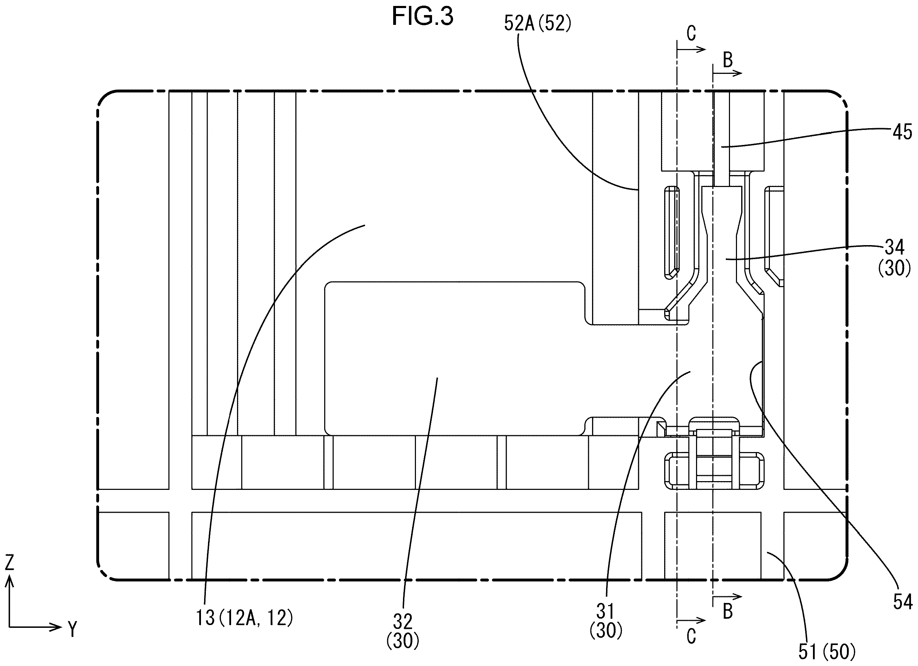

As shown in FIG. 15, the terminal 30 is provided by processing conductive sheet metal. The terminal 30 includes: a main body portion 31, a connecting portion 32 that is configured to extend rightwards from the main body portion 31; a bent plate portion 33 that is configured to extend rearwards from the lower part of the main body portion 31; and a wire connecting portion 34 that extends upwards from the main body portion 31. As shown in FIG. 3, the main body portion 31 is arranged on the left side of the terminal 30 and has a rectangular shape in a front view. The main body portion 31 is accommodated in a terminal accommodating portion 54 such that the plate thickness direction becomes the front-rear direction.

### [Connecting portion]

As shown in FIG. 15, the connecting portion 32 has a rectangular shape that is comparatively long in the left-right direction, and is formed on the same plane as the main body portion 31. The connecting portion 32 protrudes further upwards and downwards than the main body portion 31 in the up-down direction. As shown in FIG. 4, the connecting portion 32 is formed to come into surface contact with a part of the joining portion 13 or the connecting electrode leads 12A forming the joining portion 13 so as to be connected thereto. That is, the terminal 30 is not a component for connecting adjacent connecting electrode leads 12A, but a member for connecting the connecting electrode leads 12A (joining portion 13) and the electric wire 45 that are connected in advance. Thus, the size of the connecting portion 32 in the up-down direction may be smaller than the size of the connecting electrode leads 12A in the up-down direction.

### [Bent plate portion, bent portion]

As shown in FIG. 15, the bent plate portion 33 is bent substantially perpendicularly to the main body portion 31 and is formed to extend rearwards. The bent plate portion 33 is arranged such that the plate thickness direction becomes the up-down direction. The lower end of the main body portion 31 is connected to the front end of the bent plate portion 33 via a bent portion 35. The plate thickness direction of the bent portion 35 changes from the front-rear direction to the up-down direction from the main body portion 31 to the bent plate portion 33.

### [Opening portion, locking receiving portion]

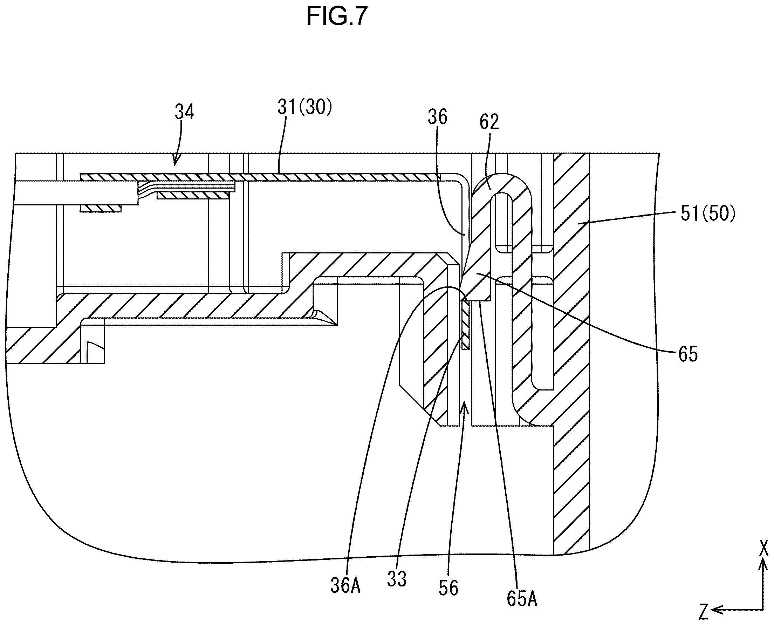

An opening portion 36 that penetrates the bent plate portion 33 is formed at the bent plate portion 33 in the up-down direction. The opening portion 36 is arranged at the center part of the bent plate portion 33 in the left-right direction. Among the edge portions of the opening portion 36, the edge portion on the rear side is provided as a locking receiving portion 36A. As shown in FIG. 7, the locking receiving portion 36A can be locked to a locking portion 65A of a flexible piece 62 described later. As shown in FIG. 15, the opening portion 36 has an expanded opening portion 36B that expands to the side of the main body portion 31. By forming the expanded opening 36B, when the terminal 30 moves relative to the protector 50 in the front-rear direction, the lower end of the main body portion 31 will not interfere with the flexible piece 62 (with reference to FIG. 6).

### [Wire connecting portion]

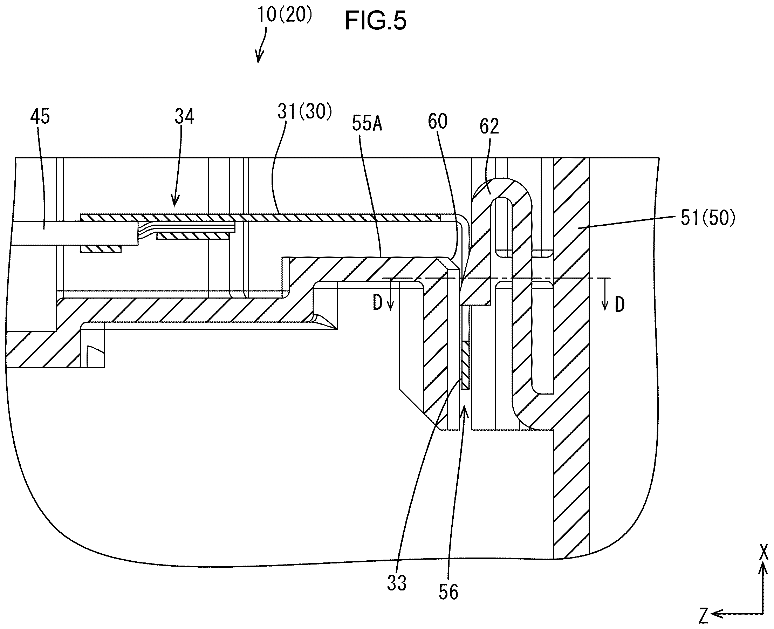

As shown in FIG. 6 and FIG. 15, the wire connecting portion 34 includes: a base 34A on the same plane as the main body portion 31; and a crimping piece 34B that extends from both ends of the base 34A in the left-right direction. The crimping piece 34B includes: a first crimping piece 34C; and a second crimping piece 34D arranged at a distance from the first crimping piece 34C in the up-down direction. The first crimping piece 34C is arranged on the side of the main body portion 31 of the wire connecting portion 34 and is crimped to the core wire 46 of the electric wire 45. The second crimping piece 34D is arranged at the upper end of the wire connecting portion 34 and is crimped to the insulating coating 47 of the electric wire 45. In addition, the wire connecting portion 34 is shown in a simplified manner other than the cases in FIG. 5 to FIG. 7 and FIG. 15.

As shown in FIG. 6, the crimping piece 34B crimps the electric wire 45 behind the base 34A. The wire connecting portion 34 arranged behind the main body portion 31 is arranged inside a wire connecting portion accommodating portion 57 described later. By means of such configuration, the size of the wiring unit 20 in the front-rear direction can be reduced.

### [Protector]

As shown in FIG. 1, the protector 50 is composed of an insulating synthetic resin and is plate-shaped. The protector 50 includes a protector main body 51 that is positioned relative to the housing 15 (and the battery stack 11L). As shown in FIG. 2, electrode accommodating recesses 52 are provided in parallel in the left-right direction at the center part of the protector main body 51 in the up-down direction. The electrode accommodating recess 52 is formed in a penetrating manner in the front-rear direction and has a rectangular shape that is comparatively long in the front-rear direction. The electrode accommodating recess 52 is composed of a connecting electrode accommodating recess 52A for receiving the joining portion 13 and the connecting electrode leads 12A and an output electrode accommodating recess 52B for receiving the output electrode leads 12B and the output portion 14.

As shown in FIG. 2, bus bar holding portions 53 for holding the bus bar 40 are provided on the upper and lower sides of the output electrode accommodating recess 52B. A bolt fastening portion 53A for fastening the bus bar 40 by means of a bolt is provided on the right side of the upper bus bar holding portion 53. A terminal accommodating portion 54 for accommodating a part of the terminal 30 is provided on the diagonally lower left side of the connecting electrode accommodating recess 52A.

### [Abutment portion]

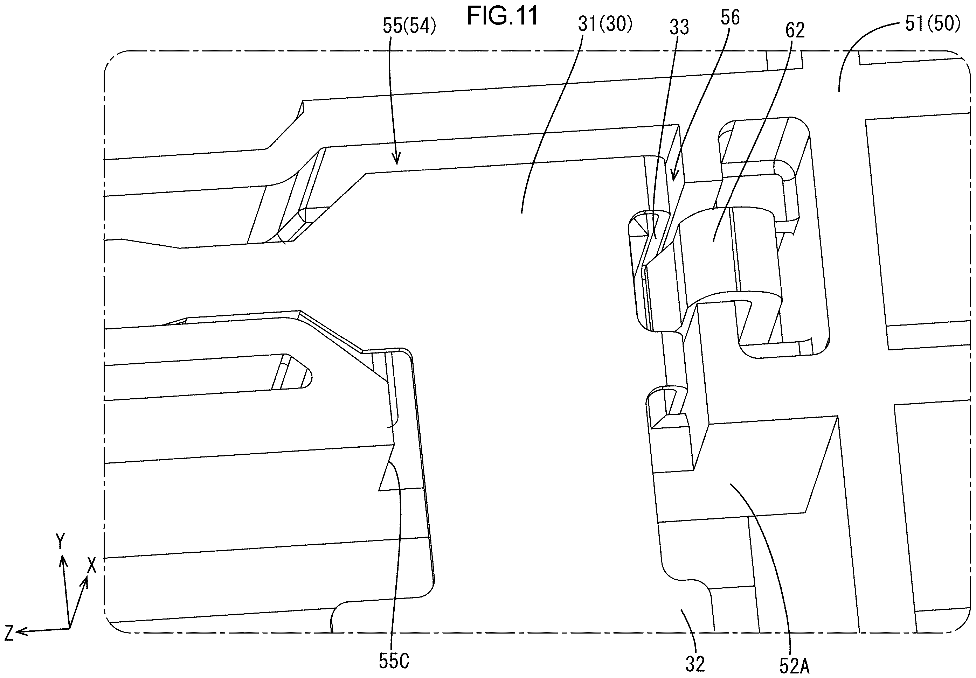

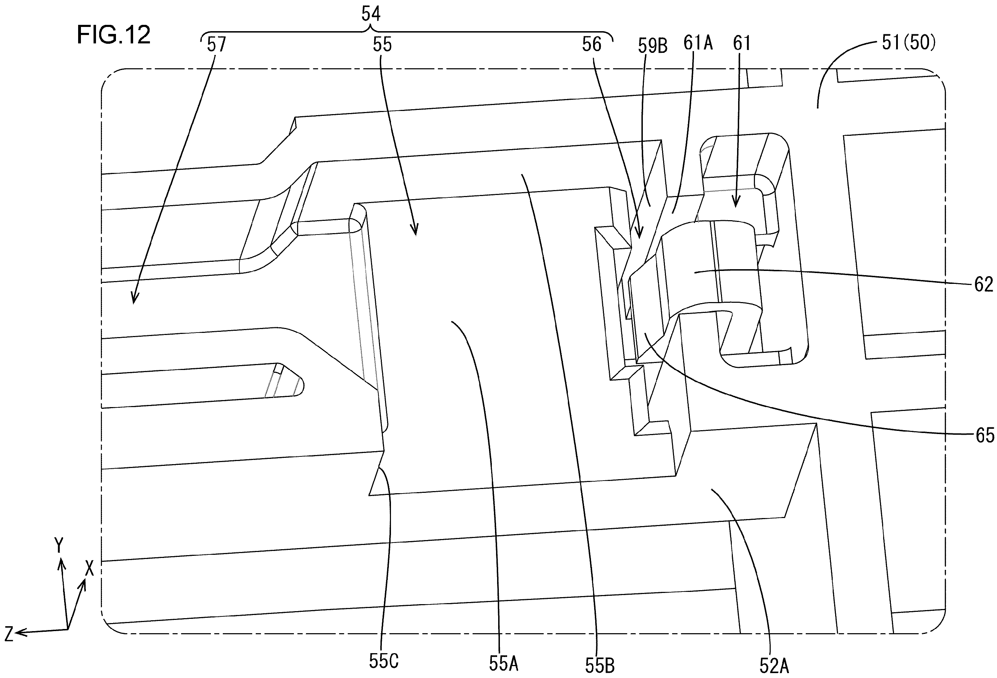

As shown in FIG. 12, the terminal accommodating portion 54 is formed to be recessed rearwards from the protector main body 51. The terminal accommodating portion 54 includes a main body portion accommodating portion 55, a recess 56, and a wire connecting portion accommodating portion 57. The main body portion accommodating portion 55 is arranged at a lower side part of the terminal accommodating portion 54. The main body portion accommodating portion 55 has: a bottom wall portion 55A; a left wall portion 55B that extends forwards from the left end of the bottom wall portion 55A; and a communicating hole 55C that opens rightwards. The communicating hole 55C communicates with the connecting electrode accommodating recess 52A. As shown in FIG. 11, the main body portion accommodating portion 55 accommodates the main body portion 31 of the terminal 30. As shown in FIG. 6, the front surface of the bottom wall portion 55A serves as an abutment portion 58 that abuts against the terminal 30 from behind. As shown in FIG. 11, a part of the main body portion 31 on the side of the connecting portion 32 is arranged in the communicating hole 55C, and the connecting portion 32 is arranged inside the connecting electrode accommodating recess 52A.

### [Recess]

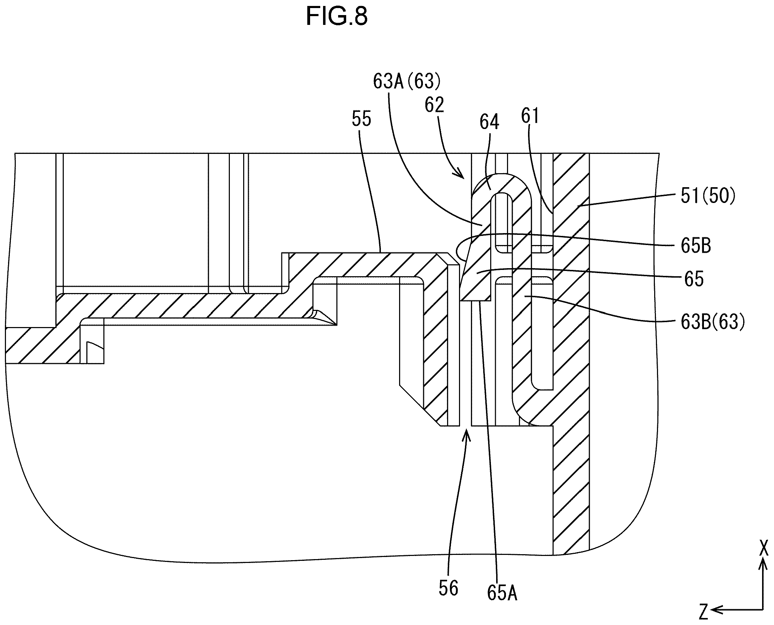

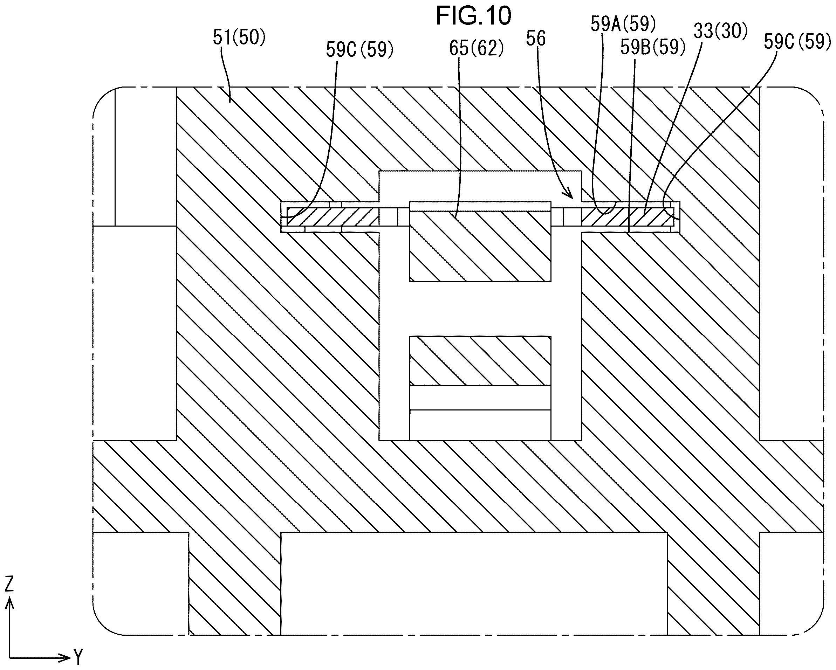

As shown in FIG. 8 and FIG. 12, the recess 56 is formed below the main body portion accommodating portion 55. The recess 56 is recessed further rearwards than the main body portion accommodating portion 55. The recess 56 is formed to penetrate the protector 50 in the front-rear direction. As shown in FIG. 10, an inner wall 59 that forms the recess 56 includes: a first inner wall 59A and a second inner wall 59B that are opposite to each other in the up-down direction; and two side walls 59C that are opposite to each other in the left-right direction. The first inner wall 59A is arranged above the second inner wall 59B (the side of the main body portion accommodating portion 55). The size between the first inner wall 59A and the second inner wall 59B is set to be the same as or slightly larger than the plate thickness (the size in the up-down direction) of the bent plate portion 33. The size between the two side walls 59C is set to be the same as or slightly larger than the size of the bent plate portion 33 in the left-right direction. The bent plate portion 33 is housed inside the recess 56 so that the bent plate portion 33 can come into a sliding contact with the inner wall 59 of the recess 56. By means of the sliding contact of the bent plate portion 33 with the inner wall 59 of the recess 56, as shown in FIGS. 5 to 7 and FIG. 9, the terminal 30 is movable relative to the protector main body 51 in the front-rear direction.

As shown in FIG. 5, a guiding portion 60 is formed on the front side of the lower end of the bottom wall portion 55A. The guiding portion 60 is inclined towards the lower side in the rearward direction. When the bent plate portion 33 is inserted into the recess 56, the guiding portion 60 performs guiding to guide the rear end of the bent plate portion 33 into the recess 56.

As shown in FIG. 12, the wire connecting portion accommodating portion 57 is arranged so as to be connected to the upper part of the main body portion accommodating portion 55. As shown in FIG. 6, the wire connecting portion accommodating portion 57 is formed to be recessed towards the rear of the bottom wall portion 55A. Specifically, in a state where the main body portion 31 of the terminal 30 arranged inside the terminal accommodating portion 54 abuts against the front surface (abutment portion 58) of the bottom wall portion 55A, the front surface of the wire connecting portion accommodating portion 57 is provided in a position where the wire connecting portion 34 will not arrive. The upper part of the wire connecting portion accommodating portion 57 is connected to the wiring recess 50A in which the electric wire 45 is routed.

### [Flexible sheet]

As shown in FIG. 12, below the recess 56, a flexible piece accommodating recess 61 is formed to be recessed rearwards from the protector main body 51. An inlet port 61A that is recessed rearwards from the front end of the second inner wall 59B is formed in the second inner wall 59B between the recess 56 and the flexible piece accommodating recess 61. The recess 56 communicates with the flexible piece accommodating recess 61 by means of the inlet port 61A. As shown in FIG. 8, the flexible piece 62 extends upwards from the inner wall on the lower side of the flexible piece accommodating recess 61. As shown in FIG. 12, a part of the flexible piece 62 is arranged inside the inlet port 61A, so that the front end of the flexible piece 62 enters the recess 56.

As shown in FIG. 8, the flexible piece 62 includes: a plurality of plate portions 63 that are comparatively long in the front-rear direction and flat in the up-down direction; and a linking portion 64 that links two adjacent plate portions 63. In the embodiment, the plurality of plate portions 63 are composed of a front end side plate portion 63A arranged on the front end side (upper side) of the flexible piece 62 and a base end side plate portion 63B arranged on the base end side (lower side) of the flexible piece 62. The front end side plate portion 63A and the base end side plate portion 63B are arranged to overlap each other at a distance in the up-down direction. The front end of the front end side plate portion 63A and the front end of the base end side plate portion 63B are smoothly linked without any step difference by means of an arched linking portion 64. The rear end of the base end side plate portion 63B is connected to the lower inner wall of the flexible piece accommodating recess 61. The flexible piece 62 can be flexibly deformed in the up-down direction.

### [Locking portion]

The front end side plate portion 63A includes a locking protrusion 65 that protrudes upwards from the upper surface of the front end side plate portion 63A. The locking protrusion 65 is arranged at the rear end of the front end side plate portion 63A. The rear end surface of the locking protrusion 65 is provided as the locking portion 65A. An inclined portion 65B is arranged at the front side part of the locking protrusion 65. The inclined portion 65B is inclined towards the upper side in the rearward direction. The locking portion 65A and the inclined portion 65B are arranged to be connected in the front-rear direction. The locking protrusion 65 is arranged in the front space inside the recess 56.

When the bent plate portion 33 is inserted into the recess 56, if the rear end of the bent plate portion 33 is moved rearwards while abutting against the inclined portion 65B of the locking protrusion 65, the flexible piece 62 is gradually bent downwards. When the rear end surface (locking portion 65A) of the locking protrusion 65 is arranged inside the opening portion 36 of the bent plate portion 33, the flexible piece 62 returns to a natural state from an elastically deformed state, and the locking portion 65A and the locking receiving portion 36A become opposite to each other and lockable in the front-rear direction (with reference to FIG. 7). Thus, by providing the inclined portion 65B, the insertion of the bent plate portion 33 into the recess 56 and the locking of the bent plate portion 33 to the locking portion 65A can be smoothly performed.

### [Movement of the terminal relative to the protector in the front-rear direction]

The configuration of the protector 50 that accommodates the terminal 30 and the configuration of the terminal 30 are as described above. The movement of the terminal 30 relative to the protector 50 in the front-rear direction is described below. As described above, since the tolerance of the joining portion 13 (and the connecting electrode lead 12A) in the front-rear direction easily becomes large, the connecting portion 32 of the terminal 30 can also move in the front-rear direction to match the position of the joining portion 13 in the front-rear direction. Thus, the state in which the terminal 30 comes into contact with the connecting electrode lead 12A can be ensured, so the reliability of the electrical connection between the terminal 30 and the connecting electrode lead 12A welded by laser can be improved.

In the embodiment, the bent plate portion 33 of the terminal 30 is arranged inside the recess 56 of the terminal accommodating portion 54, so that the terminal 30 is movable relative to the protector 50 in the front-rear direction. The terminal 30 is movable relative to the protector main body 51 between a first position (with reference to FIG. 6) and a second position (with reference to FIG. 7) in the front-rear direction. Herein, the first position is the rearmost position to which the terminal 30 is movable, and the second position is the frontmost position to which the terminal 30 is movable. As shown in FIG. 6, when the terminal 30 is arranged in a state where it is in the first position, the rear surface of the main body portion 31 abuts against the abutment portion 58. Thus, the rearward movement of the terminal 30 is restricted. As shown in FIG. 7, when the terminal 30 is arranged in a state where it is in the second position, the locking receiving portion 36A of the terminal 30 is locked to the locking portion 65A of the flexible piece 62. Thus, the forward movement of the terminal 30 is restricted.

The length between the first position and the second position in the front-rear direction is set to be the same as or larger than the length obtained by doubling the tolerance of the connecting electrode lead 12A in the front-rear direction. In addition, a middle position between the first position and the second position is an average position of the connecting electrode lead 12A in the front-rear direction. By setting the first position and the second position in this manner, after the protector main body 51 of the wiring unit 20 is fixed relative to the battery stack 11L, the terminal 30 can follow the connecting electrode lead 12A. In detail, when the terminal 30 and the connecting electrode lead 12A are subjected to laser welding, the connecting portion 32 of the terminal 30 is pressed corresponding to the connecting electrode lead 12A by means of a jig or the like. In this case, the terminal 30 moves in the front-rear direction to match the connecting electrode lead 12A. Thus, the state in which the connecting portion 32 and the connecting electrode lead 12A are in close contact with each other can be ensured, so that the laser welding of the connecting portion 32 and the connecting electrode lead 12A is well performed.

### [Functions and Effects of Embodiment 1]

According to Embodiment 1, the following functions and effects are produced. The wiring unit 20 involved in Embodiment 1 is mounted on a battery stack 11L, which is formed by stacking a plurality of laminated batteries 11 including electrode leads 12, and includes a joining portion 13 for joining the electrode leads 12 of the laminated batteries 11 in a mutually overlapping manner, the wiring unit 20 comprising: a terminal 30; an electric wire 45 that is connected to the terminal 30; and a protector 50 that holds the terminal 30 and the electric wire 45, the terminal 30 including: a main body portion 31; a connecting portion 32 that is configured to extend from the main body portion 31 and is oppositely connected, in a first direction (front-rear direction), to the electrode leads 12 forming the joining portion 13; and at least one bent plate portion 33 that extends from the main body portion 31 to the side of the laminated batteries 11 (rear side) in the first direction, and the protector 50 including: a protector main body 51; and at least one recess 56 that is recessed towards the side of the laminated batteries 11 in the first direction relative to the protector main body 51 and accommodates the bent plate portion 33, the bent plate portion 33 being inserted into the recess 56 so as to be movable in the first direction, so that the connecting portion 32 can come into contact with the electrode leads 12.

According to such configuration, the bent plate portion 33 is inserted into the recess 56 so as to be movable in the first direction, so that the connecting portion 32 is moveable relative to the protector 50 in the first direction, so when the connecting portion 32 is connected to the electrode leads 12 forming the joining portion 13, the connecting portion 32 can be brought into contact with the electrode leads 12 even if there is the manufacturing tolerance of the electrode leads 12 in the first direction. Thus, the reliability of the electrical connection between the connecting portion 32 and the electrode leads 12 can be improved.

In Embodiment 1, the protector 50 includes the abutment portion 58, and abuts against the terminal 30 from the side of the laminated batteries 11 in the first direction.

According to such configuration, the movement of the terminal 30 towards the side of the laminated batteries 11 in the first direction can be restricted by means of the abutment portion 58.

In Embodiment 1, the protector 50 includes the locking portion 65A, and is locked to the terminal 30 from a side (front side) opposite to the side of the laminated batteries 11 in the first direction.

According to such configuration, the movement of the terminal 30 towards the side opposite to the side of the laminated batteries 11 in the first direction can be restricted by means of the locking portion 65A.

In Embodiment 1, the protector 50 includes the flexible piece 62 that extends from the protector main body 51 and is flexibly deformable in a direction orthogonal to the first direction (up-down direction), the front end of the flexible piece 62 includes the locking portion 65A that is arranged inside the recess 56, the opening portion 36 that penetrates the bent plate portion 33 is formed at the bent plate portion 33, and the edge part of the opening portion 36 includes the locking receiving portion 36A that is locked to the locking portion 65A.

According to such configuration, the insertion of the bent plate portion 33 into the recess 56 and the locking of the terminal 30 relative to the protector 50 can be smoothly performed by providing the flexible piece 62 including the locking portion 65A.

In Embodiment 1, the terminal 30 includes the wire connecting portion 34 that is configured to extend from the main body portion 31 and connects the electric wire 45, the wire connecting portion 34 includes: the base 34A; and the crimping piece 34B that extends from the base 34A, and the electric wire 45 is arranged in a position closer to the side of the laminated batteries 11 in the first direction than the base 34A and is crimped by the crimping piece 34B.

According to such configuration, since the electric wire 45 is arranged to be closer to the side of the laminated batteries 11 in the first direction than the base 34A, the size by which protrusion from the main body portion 31 of the wire connecting portion 34 to the side opposite to the side of the laminated batteries 11 in the first direction is made is easily reduced. Thus, the size of the wiring unit 20 in the first direction can be reduced.

### <Embodiment 2>

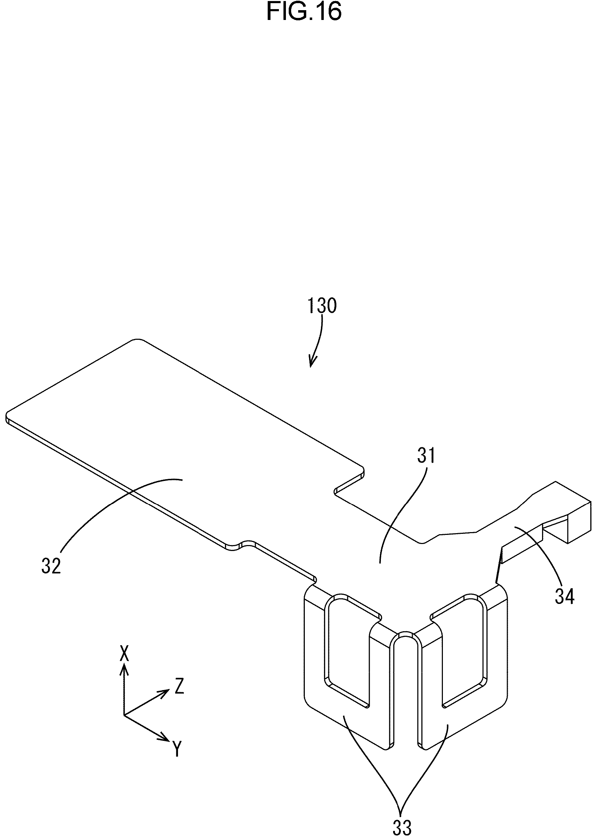

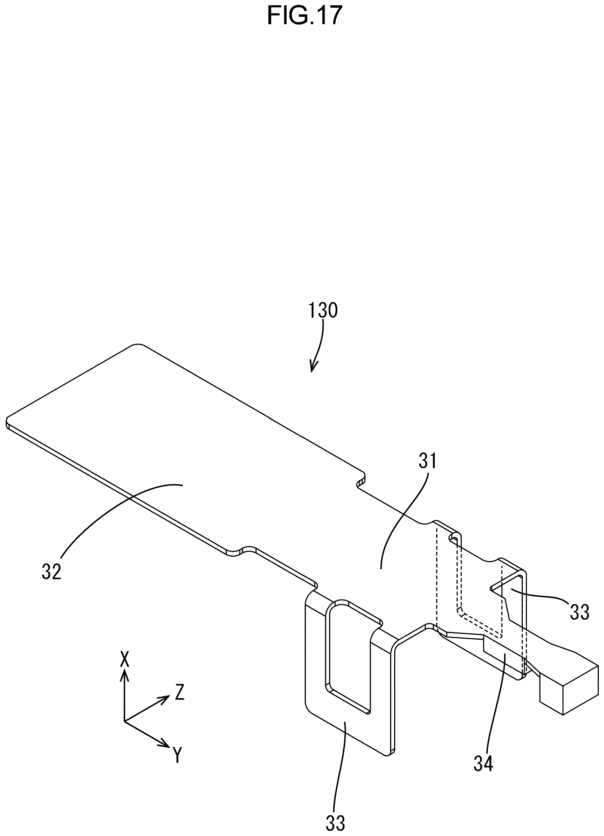

Embodiment 2 of the disclosure is described with reference to FIG. 16 and FIG. 17. The same configurations as those in Embodiment 1 are marked with the same reference signs as those in Embodiment 1, and descriptions are sometimes omitted. In addition, the descriptions of the same functions and effects as those in Embodiment 1 are omitted. A terminal 130 involved in Embodiment 2 includes two bent plate portions 33. By making the number of the bent plate portions 33 be larger than that in Embodiment 1, the state in which the terminal 130 moves relative to the protector 50 is easily made to be more stable.

The two bent plate portions 33 are arranged to extend in the same direction as the main body portion 31 of the terminal 130, that is, in the front-rear direction in which the terminal 130 is movable. For example, as shown in FIG. 16, the two bent plate portions 33 may also be arranged on the lower side and the left side of the main body portion 31. In addition, as shown in FIG. 17, the two bent plate portions 33 may also be arranged on the lower side and the upper side of the main body portion 31 so as to be opposite to each other. Although not shown, the protector 50 has the recesses 56 in positions corresponding to the two bent plate portions 33. That is, two recesses 56 are formed for one terminal 130 in the protector 50.

### [Functions and Effects of Embodiment 2]

According to Embodiment 2, the following functions and effects are produced. In Embodiment 2, the terminal 130 includes a plurality of (two) bent plate portions 33.

According to such configuration, by forming the plurality of bent plate portions 33, the state of the terminal 130 is easily controlled.

### < Embodiment 3>

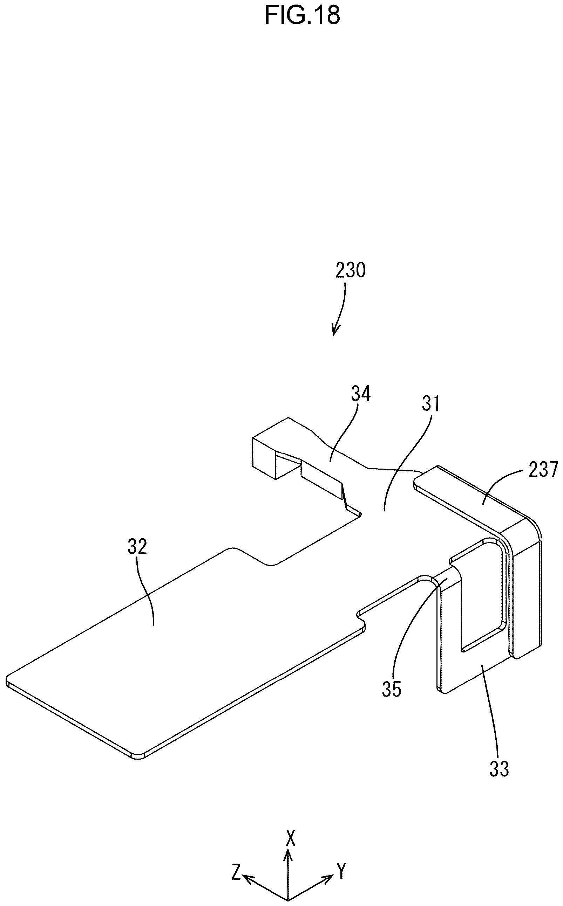

Embodiment 3 of the disclosure is described with reference to FIG. 18. The same configurations as those in Embodiment 1 are marked with the same reference signs as those in Embodiment 1, and descriptions are sometimes omitted. In addition, the descriptions of the same functions and effects as those in Embodiment 1 are omitted. A terminal 230 involved in Embodiment 3 includes a folded portion 237 having a folded shape at the left end of the terminal 230. The folded portion 237 is folded so as to overlap the left end of the main body portion 31, the left end of the bent portion 35, and the left end of the bent plate portion 33.

### [Functions and Effects of Embodiment 3]

According to Embodiment 3, the following functions and effects are produced. In Embodiment 3, the terminal 230 includes: the bent portion 35 that connects the end edge of the main body portion 31 and the end edge of the bent plate portion 33; and the folded portion 237 that is connected to and overlaps the main body portion 31, the bent portion 35 and the bent plate portion 33.

According to such configuration, the strength of the bent portion 35 can be improved by means of the folded portion 237.

### <Embodiment 4>

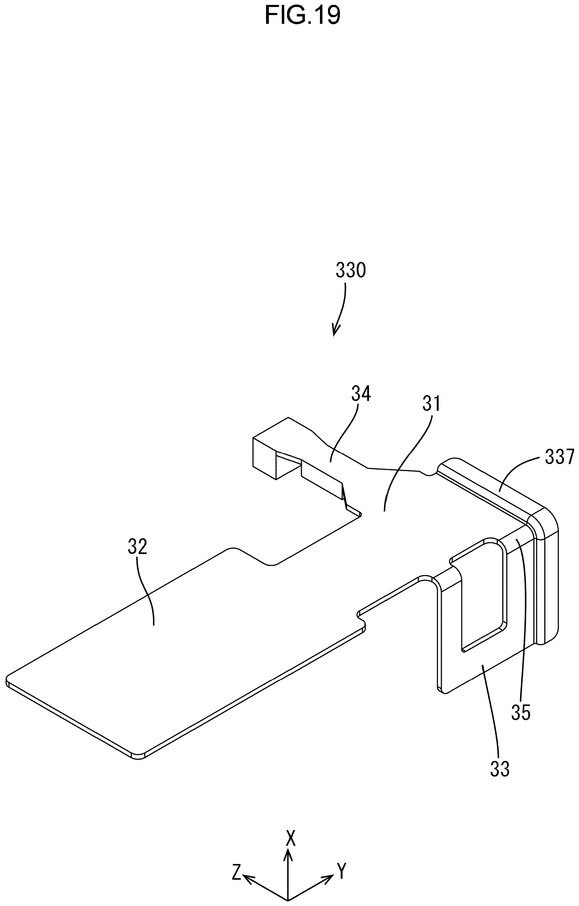

Embodiment 4 of the disclosure is described with reference to FIG. 19. The same configurations as those in Embodiment 1 are marked with the same reference signs as those in Embodiment 1, and descriptions are sometimes omitted. In addition, the descriptions of the same functions and effects as those in Embodiment 1 are omitted. A terminal 330 involved in Embodiment 4 includes a protruding portion 337 at the left end of the terminal 330. The protruding portion 337 includes at least a portion that protrudes from the outer curved surface of the bent portion 35 in the plate thickness direction of the bent portion 35. The protruding portion 337 of Embodiment 4 further includes a portion that protrudes forwards from the front surface of the main body portion 31 and a portion that protrudes downwards from the lower surface of the bent plate portion 33. The protruding portion 337 of Embodiment 4 is formed by hammering.

### [Functions and Effects of Embodiment 4]

According to Embodiment 4, the following functions and effects are produced. In Embodiment 4, the terminal 330 includes the bent portion 35 that connects the end edge of the main body portion 31 and the end edge of the bent plate portion 33, and the plate thickness direction of the bent portion 35 continuously changes from a first direction (front-rear direction) to a direction orthogonal to the first direction (up-down direction) from the main body portion 31 to the bent plate portion 33, and the bent portion 35 includes the protruding portion 337 that protrudes from the bent portion 35 in the plate thickness direction of the bent portion 35.

According to such configuration, the strength of the bent portion 35 can be improved by means of the protruding portion 337.

### <Embodiment 5>

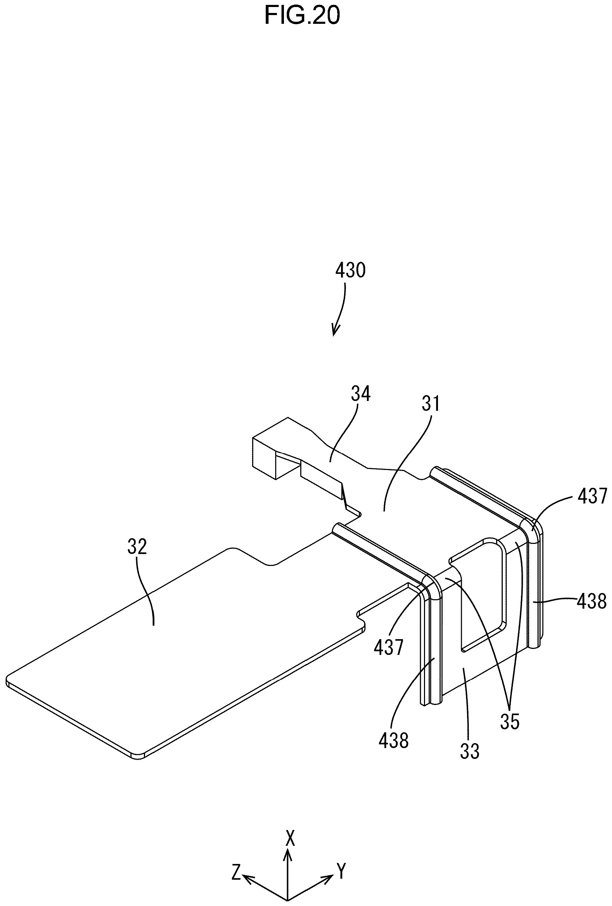

Embodiment 5 of the disclosure is described with reference to FIG. 20 to FIG. 22. The same configurations as those in Embodiment 1 are marked with the same reference signs as those in Embodiment 1, and descriptions are sometimes omitted. In addition, the descriptions of the same functions and effects as those in Embodiment 1 are omitted. As shown in FIG. 20, a terminal 430 involved in Embodiment 5 includes: a protruding portion 437 that protrudes from the bent portion 35 in the same manner as the protruding portion 337 of Embodiment 4; and a protruding strip portion 438 that is formed continuously with the protruding portion 437 on the bent plate portion 33.

The protruding portion 437 of Embodiment 5 has a smaller size in the left-right direction than the protruding portion 337 of Embodiment 4. In addition, the terminal 430 of Embodiment 5 includes two protruding portions 437 that are arranged in the left-right direction. The two protruding portions 437 are formed at the left and right ends of the bent portion 35. The protruding portion 437 includes at least a portion that protrudes from the outer curved surface of the bent portion 35 in the plate thickness direction of the bent portion 35. The protruding portion 437 of Embodiment 5 further includes a portion that protrudes forwards from the front surface of the main body portion 31.

In Embodiment 5, two protruding strip portions 438 are formed at the left end and the right end of the bent plate portion 33. The protruding strip portion 438 is formed in an elongated shape in the front-rear direction and protrudes downwards from the lower surface of the bent plate portion 33. The front end of the protruding strip portion 438 is continuous with the lower end of the protruding portion 437. The protruding portion 437 and the protruding strip portion 438 of Embodiment 5 are formed by reinforcement processing. The protruding portion 437 and the protruding strip portion 438 also contribute to the improvement of the strength of the bent portion 35 like the protruding portion 337 of Embodiment 4.

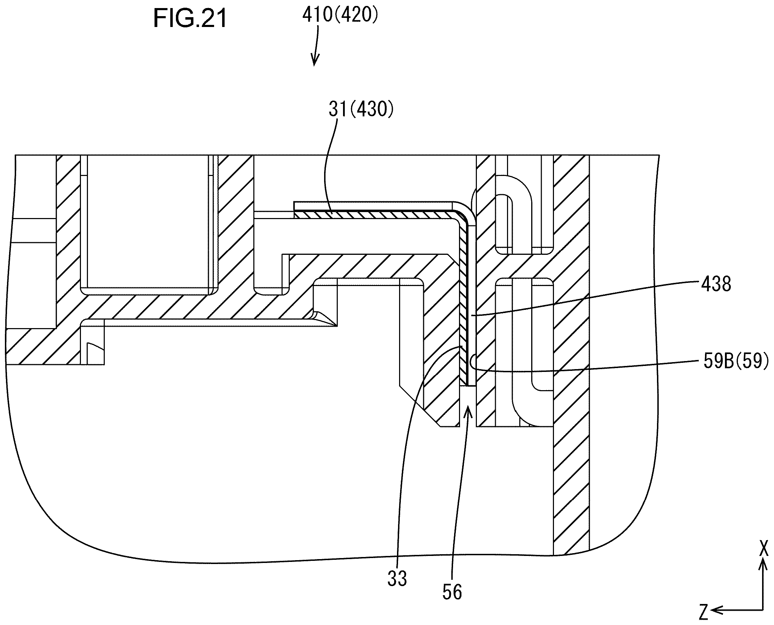

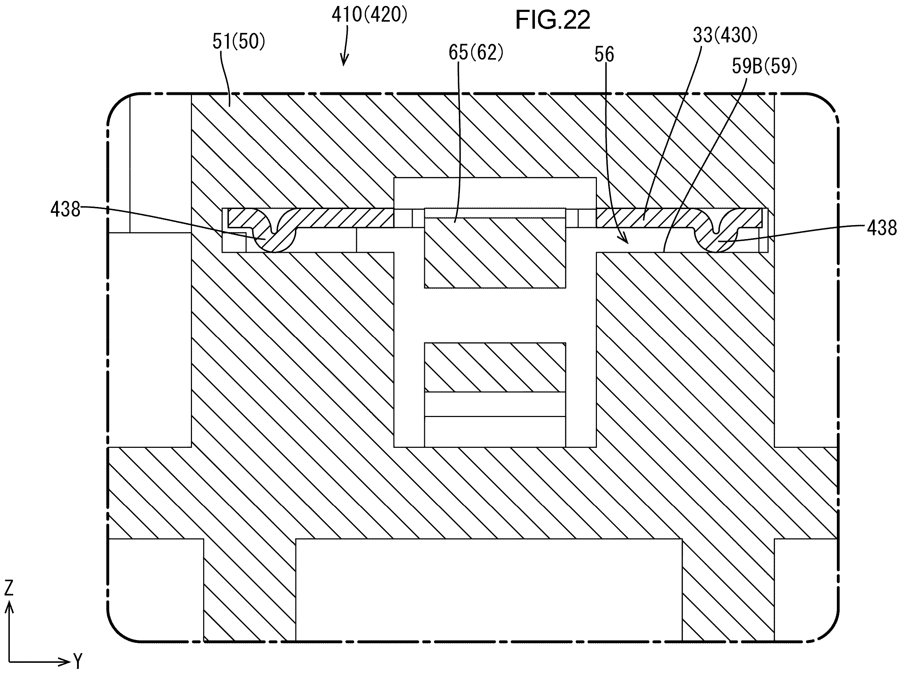

As shown in FIG. 21 and FIG. 22, in a power storage module 410 (wiring unit 420) of Embodiment 5, the protruding strip portion 438 is accommodated in the recess 56 of the protector 50. The protruding strip portion 438 is arranged to be opposite to and in sliding contact with the second inner wall 59B of the protector 50. In Embodiment 1, the whole of the lower surface of the bent plate portion 33 is in surface contact with the second inner wall 59B so as to be in sliding contact therewith. In contrast, in Embodiment 5, the lower part of the protruding strip portion 438 in the bent plate portion 33 is in surface contact with the second inner wall 59B, and is in sliding contact therewith in a manner similar to the so-called line contact. Thus, as compared with the case in Embodiment 1, in Embodiment 5, the friction resistance involved in the sliding contact between the terminal 430 and the inner wall 59 of the recess 56 becomes small, and the terminal 430 becomes easily movable relative to the protector main body 51 in the front-rear direction.

### [Functions and Effects of Embodiment 5]

According to Embodiment 5, the following function and effects are produced. In Embodiment 5, the bent plate portion 33 includes the protruding strip portion 438 that protrudes from the bent plate portion 33 to the inner wall 59 (second inner wall 59B) of the recess 56 in a direction (downward direction) orthogonal to the first direction and extends in the first direction, and the protruding strip portion 438 and the protruding portion 437 are continuously formed.

According to such configuration, the part where the bent plate portion 33 and the inner wall 59 of the recess 56 come into contact with each other can be reduced by forming the protruding strip portion 438, so even if the bent plate portion 33 comes into contact with the inner wall 59 of the recess 56, the bent plate portion 33 is easily slidable. In addition, since the protruding strip portion 438 and the protruding portion 437 are continuously formed, the protruding strip portion 438 and the protruding portion 437 are easily formed.

### <Embodiment 6>

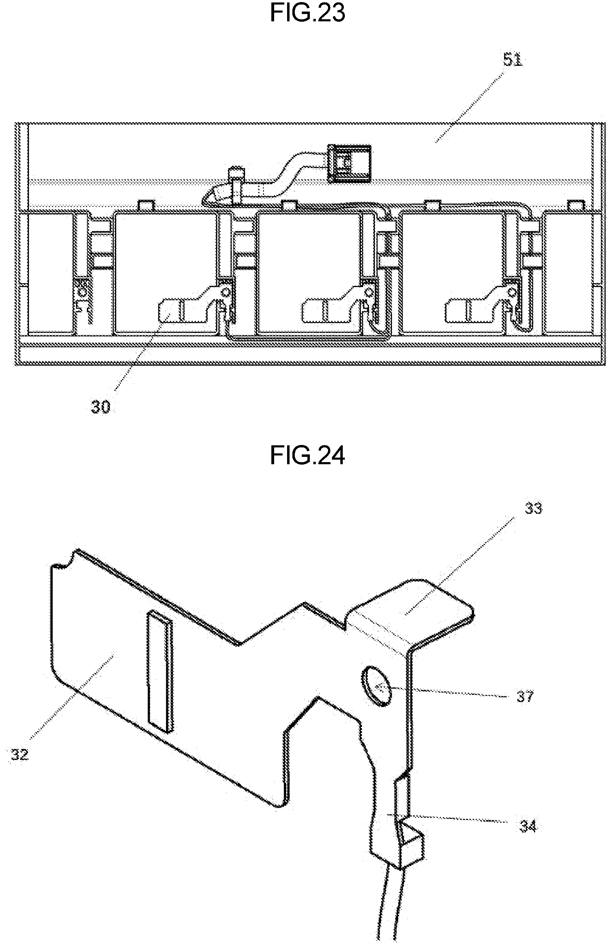

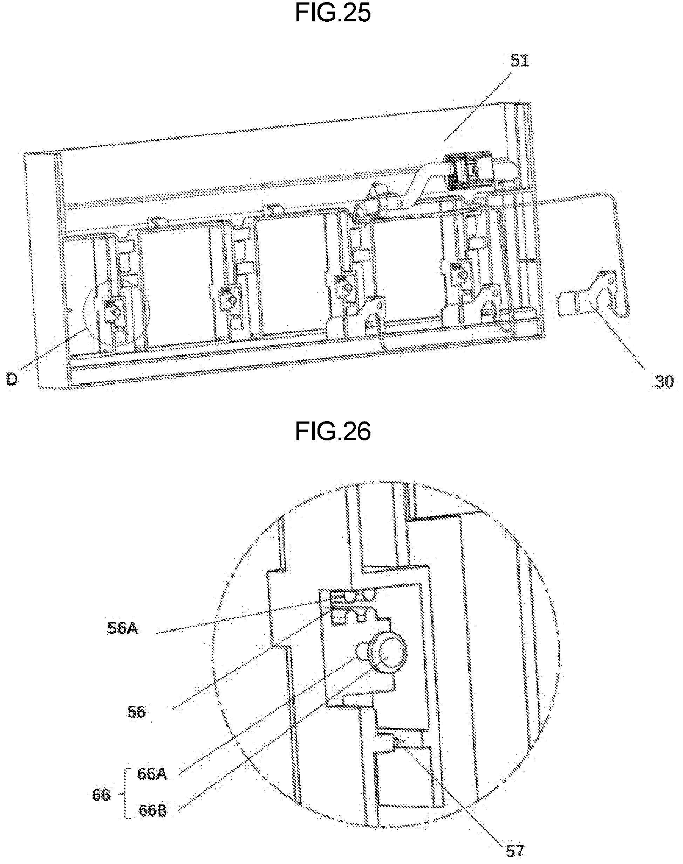

Embodiment 6 is described with reference to FIG. 23 to FIG. 26. The same configurations as those in Embodiment 1 are marked with the same reference signs as those in Embodiment 1, and descriptions are sometimes omitted. In addition, the descriptions of the same functions and effects as those in Embodiment 1 are omitted. As shown in FIG. 24 and FIG. 26, the wire connecting portion 34 extends on the terminal 30, and the protector main body 50 is provided with the wire connecting portion accommodating portion 57, in which the wire connecting portion 34 is arranged.

### [Functions and Effects of Embodiment 6]

According to such configuration, by providing the wire connecting portion 34 to match the wire connecting portion accommodating portion 57, the terminal 30 can be prevented from rotating during welding of the terminal 30 with the electrode leads 12, which improves the stability of the terminal 30 and avoids poor welding.

### <Embodiment 7>

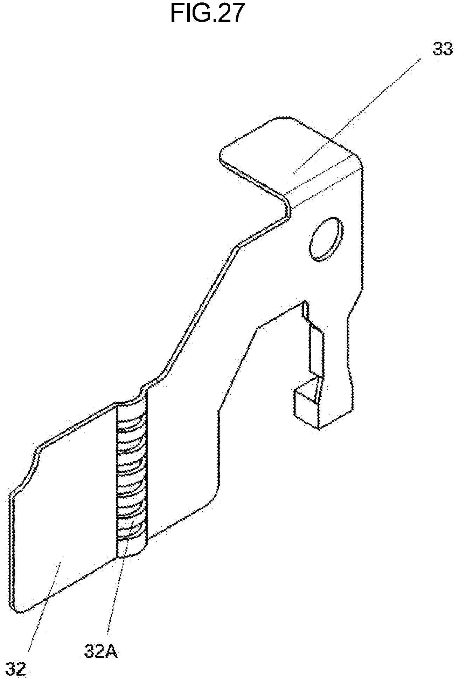

Embodiment 7 is described with reference to FIG. 27. The same configurations as those in Embodiment 1 are marked with the same reference signs as those in Embodiment 1, and descriptions are sometimes omitted. In addition, the descriptions of the same functions and effects as those in Embodiment 1 are omitted. The connecting portion 32 is provided with an arc-shaped connecting portion 32A, which is arranged to absorb the displacement of the electrode leads 12. Further, the arc-shaped connecting portion 32A is provided with several strip-shaped holes, so that the arc-shaped connecting portion 32A is formed into a comb-tooth shape, which is beneficial for the arc-shaped connecting portion 32A to deform and absorb the displacement of the electrode leads 12 when the electrode leads 12 are displaced.

### [Functions and Effects of Embodiment 7]

According to such configuration, by connecting the electrode lead 12 to the end of the laminated battery 11, when the laminated battery 11 expands and deforms, the electrode lead 12 will also be displaced to a certain extent along with the cell, but in the embodiment, the arc-shaped connecting portion 32A is provided on the connecting portion 32 of the terminal 30, so that the arc-shaped connecting portion 32A can absorb the displacement of the electrode leads 12 to thereby avoid the risk of the structure of the terminal 30 being unstable, and the terminal 30 falling off or even breaking caused by the terminal 30 being pulled when the electrode leads 12 are displaced.

### <Other embodiments>

(1) In the aforesaid embodiments, the joining portion 13 is formed by joining four electrode leads 12, but the case is not limited thereto. The case is allowed as long as the joining portion is formed by joining a plurality of electrode wires. (2) In Embodiment 1, the terminal 30 is configured to have the opening portion 36, and the edge part of the opening portion 36 includes the locking receiving portion 36A, but the case is not limited thereto. For example, the terminal may also be configured to have no opening portion but to include a locking receiving portion that protrudes from the bent plate portion. (3) In the aforesaid embodiments, the protector 50 includes the flexible piece 62, which includes the locking portion 65A, but the case is not limited thereto. The protector may also lock the terminal from the front side by means of a member that is different from the flexible piece. (4) The wire connecting portion 34 of Embodiment 1 extends upwards from the main body portion 31, but may also extend downwards from the main body portion 31 as shown in FIG. 23 and FIG. 24. (5) In Embodiment 1, the bent plate portion 33 is located at the lower end of the main body portion 31, but may also be located above the main body portion 31 as shown in FIG. 23 and FIG. 24. (6) As another alternative to Embodiment 5, as shown in FIGS. 25 and 26, in the embodiment, a convex portion 56A is convexly provided on the side wall of the recess 56, and the convex portion 56A abuts against the flat sheet-shaped bent plate portion 33, which reduces the contact area between the recess 56 and the bent plate portion 33 and facilitates the movement of the bent plate portion 33 in the recess 56. (7) As another alternative to the locking portion 65A in Embodiment 1, as shown in FIGS. 25 and 26, in the embodiment, the protector main body 50 is provided with a limiting column 66, the terminal 30 is provided with a through hole 37, and the limiting column 66 is configured to pass through the through hole 37. Specifically, the limiting column 66 includes a column body 66A and a column head 66B that is connected to the column body 66A, and in the height direction of the column body 66A, the projection area of the column head 66B is larger than the projection area of the through hole 37, and the projection area of the through hole 37 is larger than the projection area of the column body 66A, so that not only can the through hole 37 in the terminal 30 pass through the column body 66A, but also can the terminal 30 move in the height direction of the column body 66A, and the column head 66B and the protector main body jointly limit the forward and backward movement of the terminal 30.

### Descriptions of the reference signs

10, 410: power storage module
11: laminated battery
11L: battery stack
12: electrode lead
12A: connecting electrode lead
12B: output electrode lead
13: joining portion
14: output portion
15: housing
15A: bottom portion
15B: top portion
15C: side portion
20, 420: wiring unit
30, 130, 230, 330, 430: terminal
31: main body portion
32: connecting portion
32A: arc-shaped connecting portion
33: bent plate portion
34: wire connecting portion
34A: base
34B: crimping piece
34C: first crimping piece
34D: second crimping piece
35: bent portion
36: opening portion
37: through hole
36A: locking receiving portion
36B: expanded opening portion
40: bus bar
40A: first portion
40B: second portion
41: bus bar side connecting portion
41A: penetrating hole
45: electric wire
46: core wire
47: insulating coating
48: connector
48A: housing
48B: male terminal
50: protector
50A: wiring recess
51: protector main body
52: electrode accommodating recess
52A: connecting electrode accommodating recess
52B: output electrode accommodating recess
53: bus bar holding portion
53A: bolt fastening portion
54: terminal accommodating portion
55: main body portion accommodating portion
55A: bottom wall portion
55B: left wall portion
55C: communicating hole
56: recess
56A: convex portion
57: wire connecting portion accommodating portion
58: abutment portion
59: inner wall
59A: first inner wall
59B: second inner wall
59C: side wall
60: guiding portion
61: flexible piece accommodating recess
61A: inlet port
62: flexible piece
63: plate portion
63A: front end side plate portion
63B: base end side plate portion
64: linking portion
65: locking protrusion
65A: locking portion
65B: inclined portion
66: limiting column
66A: column body
66B: column head
237: folded portion
337, 437: protruding portion
438: protruding strip portion.

## Claims

1. A wiring unit that is mounted on a battery stack, which is formed by stacking a plurality of laminated batteries including electrode leads, the laminated batteries including a joining portion for joining the electrode leads of the laminated batteries in a mutually overlapping manner, the wiring unit being **characterized by** comprising:
a terminal;
an electric wire that is connected to the terminal;
and a protector that holds the terminal and the electric wire,
the terminal including: a main body portion; a connecting portion that is configured to extend from the main body portion and is oppositely connected, in a first direction, to the electrode leads forming the joining portion; and at least one bent plate portion that extends from the main body portion to the side of the laminated batteries in the first direction,
the protector including: a protector main body; and at least one recess that is recessed towards the side of the laminated batteries in the first direction relative to the protector main body and accommodates the bent plate portion, the bent plate portion being inserted into the recess so as to be movable in the first direction, so that the connecting portion can come into contact with the electrode leads.

2. The wiring unit according to claim 1, **characterized in that**
the terminal includes: a bent portion that connects an end edge of the main body portion to an end edge of the bent plate portion; and a folded portion that is connected to and overlaps the main body portion, the bent portion, and the bent plate portion.

3. The wiring unit according to claim 1, **characterized in that**
the terminal includes a bent portion that connects the end edge of the main body portion and the end edge of the bent plate portion, the plate thickness direction of the bent portion continuously changes from the first direction to a direction orthogonal to the first direction from the main body portion towards the bent plate portion, and the bent portion includes a protruding portion that protrudes from the bent portion in the plate thickness direction of the bent portion.

4. The wiring unit according to claim 3, **characterized in that**
the bent plate portion includes a protruding strip portion that protrudes from the bent plate portion towards the inner wall of the recess in a direction orthogonal to the first direction and extends in the first direction, and the protruding strip portion and the protruding portion are continuously formed.

5. The wiring unit according to claim 1, **characterized in that**
a convex portion is convexly provided on the side wall of the recess, and the convex portion can abut against the bent plate portion.

6. The wiring unit according to any of claims 1 to 4, **characterized in that**
the terminal includes a plurality of bent plate portions.

7. The wiring unit according to any of claims 1 to 4, **characterized in that**
the protector includes an abutment portion that abuts against the terminal from the side of the laminated batteries in the first direction.

8. The wiring unit according to any of claims 1 to 4, **characterized in that**
the protector includes a locking portion that is locked to the terminal from a side opposite to the side of the laminated batteries in the first direction.

9. The wiring unit according to claim 8, **characterized in that**
the protector includes a flexible piece that extends from the protector main body and is flexibly deformable towards a direction orthogonal to the first direction, the front end of the flexible piece includes the locking portion and is arranged inside the recess, an opening portion that penetrates the bent plate portion is formed at the bent plate portion, and the edge part of the opening portion includes a locking receiving portion that is locked to the locking portion.

10. The wiring unit according to claim 1, **characterized in that**
the protector main body is provided with a limiting column, the terminal is provided with a through hole, and the limiting column is configured to pass through the through hole;
the limiting column includes a column body and a column head that is connected to the column body, and in the height direction of the column body, the projection area of the column head is larger than the projection area of the through hole, and the projection area of the through hole is larger than the projection area of the column body.

11. The wiring unit according to any of claims 1 to 4, **characterized in that**
the terminal includes a wire connecting portion that is configured to extend from the main body portion and connects the electric wire, the wire connecting portion includes a base and a crimping piece that extends from the base, and the electric wire is arranged to be closer to the side of the laminated batteries in the first direction than the base and is crimped by the crimping piece.

12. The wiring unit according to claim 1, **characterized in that**
a wire connecting portion extends on the terminal, and the protector main body is provided with a wire connecting portion accommodating portion, in which the wire connecting portion is arranged.

13. The wiring unit according to claim 1, **characterized in that**
the connecting portion is provided with an arc-shaped connecting portion, which is provided with several strip-shaped holes, and is arranged to absorb the displacement of the electrode leads.
